# EUROPÄISCHE PATENTSCHRIFT

(11) **EP 2 888 476 B1**
(45) Veröffentlichungstag und Bekanntmachung des Hinweises auf die Patenterteilung: **27.02.2019**
(21) Anmeldenummer: 13742592.2
(22) Anmeldetag: 24.07.2013
(51) Int. Cl.: F04B 11/00, F04B 17/04, F04B 23/06, F01N 3/20

(54) **EINRICHTUNG ZUR BEREITSTELLUNG VON UNTER EINEM VORGEBBAREN DRUCK STEHENDEN FLUIDEN**
DEVICE FOR SUPPLYING FLUIDS HAVING A PREDETERMINED LEVEL OF PRESSURE
DISPOSITIF POUR METTRE À DISPOSITION DES FLUIDES AYANT UN NIVEAU DE PRESSION PRÉDÉTERMINÉ

(30) Priorität: 22.08.2012 DE 102012016631
(43) Veröffentlichungstag der Anmeldung: 01.07.2015
(73) Patentinhaber: Hydac Electronic GmbH, 66128 Saarbrücken (DE)
(72) Erfinder: KATTLER, Frank, 66346 Püttlingen (DE); GROH, Christian, 66453 Gersheim (DE)
(74) Vertreter: Bartels und Partner, Patentanwälte
(86) Internationale Anmeldenummer: PCT/EP2013/002187
(87) Internationale Veröffentlichungsnummer: WO 2014/029457

(56) Entgegenhaltungen:
- EP-A1- 2 093 422
- EP-A2- 2 199 556
- DE-A1- 10 047 045
- DE-A1- 19 707 654
- DE-A1-102004 060 003
- DE-A1-102007 030 555
- DE-A1-102010 028 979
- US-A- 4 310 420
- US-A1- 2009 114 864

## Beschreibung

Die Erfindung betrifft eine Einrichtung zur Bereitstellung von unter einem vorgebbaren Druck stehenden Fluiden mit den Merkmalen im Oberbegriff von Anspruch 1.

Einrichtungen für eine Druckversorgung von Abnehmern verschiedenster Art, seien es Abnehmer für Prozessflüssigkeiten oder Verbraucher, die hydraulische Druckflüssigkeiten benötigen und bei denen Pumpen als Druckquelle vorgesehen sind, kommen auf den verschiedensten Einsatzgebieten zur Anwendung. Um aus der großen Vielzahl der Einsatzmöglichkeiten lediglich ein Anwendungsbeispiel herauszugreifen, das in neuerer Zeit an Bedeutung gewonnen hat, sei auf das Adblue-System verwiesen, bei dem zur Abgasbehandlung bei Verbrennungsmotoren eine wässrige Harnstofflösung aus einem die Lösung enthaltenden Vorratsbehälter zu einer Arbeitseinheit gepumpt wird, die die Harnstofflösung in den Abgasstrom einspritzt.

Aus ökonomischen wie ökologischen Gründen muss nicht nur bei diesem Anwendungsbeispiel, sondern im Allgemeinen darauf geachtet werden, dass die Bereitstellung der betreffenden, unter Druck stehenden Fluide bei geringem Aufwand der erforderlichen Einrichtung betriebssicher und energieeffizient erfolgt.

Die EP 2 093 422 A1 beschreibt eine Einrichtung zur Bereitstellung von unter einem vorgebbaren Druck stehenden Fluiden, mit mindestens einer das betreffende Fluid aus einem Fluidvorrat zu einem zugeordneten Abnehmer unter Druck zuführenden Pumpe, wobei zumindest eine Fluid aus dem Fluidvorrat ansaugende erste Pumpe und mindestens eine weitere, Fluid zum Abnehmer zuführende Pumpe vorgesehen sind und wobei die Saugseite der jeweiligen weiteren Pumpe für eine Versorgung mit einer Füllmenge des Fluids mit der Druckseite der ersten Pumpe in Verbindung ist. Somit enthält diese Druckschrift alle Merkmale des Oberbegriffs des Anspruchs 1. Magnetisch betätigbare Hubkolbenpumpe sind auch in dieser Druckschrift in Verbindung mit der Ausführung nach deren Figur 1 vorgeschlagen.

Weitere Einrichtungen zur Bereitstellung von unter einem vorgebbaren Druck stehenden Fluiden gehen aus der DE 197 07 654 A1, der US 4 310 420, der DE 10 2007 030 555 A1 und der DE 100 47 045 A1 hervor.

Im Hinblick auf diese Problematik liegt der Erfindung die Aufgabe zugrunde, eine Einrichtung der betrachteten Art zur Verfügung zu stellen, die eine besonders wirtschaftliche und effiziente Druckversorgung betreffender Abnehmer mit unter Druck stehenden Fluiden ermöglicht.
Gemäß einem Aspekt der Erfindung ist diese Aufgabe durch eine Einrichtung gelöst, die die Merkmale des Patentanspruchs 1 in seiner Gesamtheit aufweist.
Nach dem kennzeichnenden Teil des Anspruchs 1 besteht eine wesentliche Besonderheit der Erfindung darin, dass die Pumpen in Form von Kolbenpumpen vorgesehen sind, die elektrisch mittels Betätigungsmagneten betätigt sind, die derart bestromt sind, dass im Wechsel Füllhübe des Kolbens einer Pumpe mit Förderhüben des Kolbens einer anderen Pumpe zeitlich zusammenfallen. Dadurch lässt sich auch bei der Benutzung von Kolbenpumpen, die für eine dosierte Druckversorgung, auch bei höherem Druckniveau, besser als kontinuierlich fördernde, andere Pumpsysteme geeignet sind, ein verhältnismäßig geringe Druckpulsationen aufweisender, geglätteter Volumenstrom realisieren.

Es ist somit vorgesehen, dass zumindest eine Fluid aus dem Fluidvorrat ansaugende erste Pumpe und mindestens eine weitere, Fluid zum Abnehmer zuführende Pumpe vorgesehen sind und dass die Saugseite der jeweiligen weiteren Pumpe für eine Versorgung mit einer Füllmenge des Fluids mit der Druckseite der ersten Pumpe in Verbindung ist. Dadurch, dass dergestalt die Druckversorgung in Funktionsstufen unterteilt ist, wobei die erste Pumpe eine Ansaugfunktion ausübt, um für eine den Versorgungsdruck erzeugende, eigentliche Förderpumpe die jeweilige Füllung zur Verfügung zu stellen, ergeben sich mehrere Vorteile. So lassen sich Saugpumpe und Druckerzeuger jeweils optimal auf die unterschiedliche Funktion konstruktiv auslegen, beispielsweise hinsichtlich der betreffenden Abdichtungen in Anpassung an die wesentlich unterschiedlichen Druckverhältnisse an Saugpumpe und Druckpumpe. Entsprechend lassen sich auch die Antriebssysteme der Pumpen leistungsmäßig unterschiedlich dimensionieren und energetisch optimal gestalten.
In besonders vorteilhafter Weise kann die Anordnung so getroffen sein, dass mehr als eine weitere Pumpe vorgesehen ist, deren Saugseiten mittels der Fluid aus dem Fluidvorrat ansaugenden ersten Pumpe mit einer Füllmenge an Fluid versorgbar sind. Bei Abnehmern, die betriebsbedingt unterschiedliche Volumenströme eines betreffenden Druckfluids benötigen, wie dies insbesondere auch bei Adblue-Systemen der Fall ist, wo leistungsabhängig unterschiedliche Einspritzmengen der Harnstofflösung erforderlich sind, lässt sich die Druckversorgung besonders wirtschaftlich und effizient durch Zu- oder Abschalten einer betreffenden weiteren oder weiterer Pumpen bewerkstelligen, die jeweils von der ersten, als Saugpumpe dienenden Pumpe befüllbar sind.

In besonders vorteilhafter Weise kann die Anordnung so getroffen sein, dass in der Verbindung zwischen der Druckseite der ersten Pumpe und der Saugseite der zumindest einen weiteren Pumpe ein als Füllspeicher dienender, hydropneumatischer Druckspeicher vorgesehen ist. In vorteilhafter Weise ist dadurch auch bei unterschiedlichen, von betreffenden Druckpumpen angeforderten Füllmengen ein verhältnismäßig gleichbleibender Fülldruck erreichbar.

Gemäß Anspruch 4 ist vorgesehen, dass nicht nur eine das Fluid zum betreffenden Abnehmer zuführende Kolbenpumpe (Druckpumpe) verwendet wird, sondern eine Mehrzahl von Kolbenpumpen zur Druckversorgung des betreffenden Abnehmers im Parallelbetrieb betätigbar sind, wobei auch hier der wechselnde Betrieb derart gestaltet ist, dass Füllhübe des Kolbens einer Pumpe mit Förderhüben einer weiteren Pumpe zeitlich zusammenfallen. In vorteilhafter Weise lässt sich durch einen derartigen Wechselbetrieb nicht nur wie oben erwähnt ein verhältnismäßig glatter Volumenstrom erreichen, sondern die Parallelschaltung ermöglicht für einen gleichen, erforderlichen Volumenstrom kleinere Kolbendurchmesser der jeweiligen Pumpen. Dadurch sind als weitere Vorteile kleinere Kolbendurchmesser realisierbar, wobei gleichzeitig bei wirtschaftlichem Energieeinsatz höhere Taktfrequenzen sowie höhere Drücke erreichbar sind.

Es sind mit besonderem Vorteil als Betätigungsmagnete vorzugsweise drückende Elektromagnete vorgesehen, die den zugehörigen Kolben gegen eine an ihm wirkende Rückstellkraft bewegen, wobei die Kolben vorzugsweise gegen die Rückstellkraft einer Federanordnung bewegbar sind.
Bei Ausführungsbeispielen, mit denen durch eine vorgeschaltete Saugpumpe eine oder mehrere weitere Kolbenpumpe oder Kolbenpumpen befüllbar ist bzw. sind, ergibt sich der zusätzliche Vorteil, dass dank des zur Verfügung stehenden Fülldrucks der weiteren Pumpe oder Pumpen schwächere Rückstellfedern erforderlich sind, wodurch ein energetisch günstigerer Betrieb ermöglicht ist.
Nachstehend ist die Erfindung anhand von in der Zeichnung dargestellten Ausführungsbeispielen im Einzelnen erläutert. Es zeigen:
- Fig. 1: eine teils in der Art einer schematischen Funktionsskizze und in Symboldarstellung gezeigte Darstellung eines Ausführungsbeispiels der erfindungsgemäßen Einrichtung; und
- Fig. 2: zeigt eine der Fig. 1 ähnliche Darstellungen eines zweiten Ausführungsbeispiels der Erfindung.
- Fig. 3: zeigt eine Pumpendarstellung, welche nicht unter dem Schutzbereich dieser Erfindung fällt.

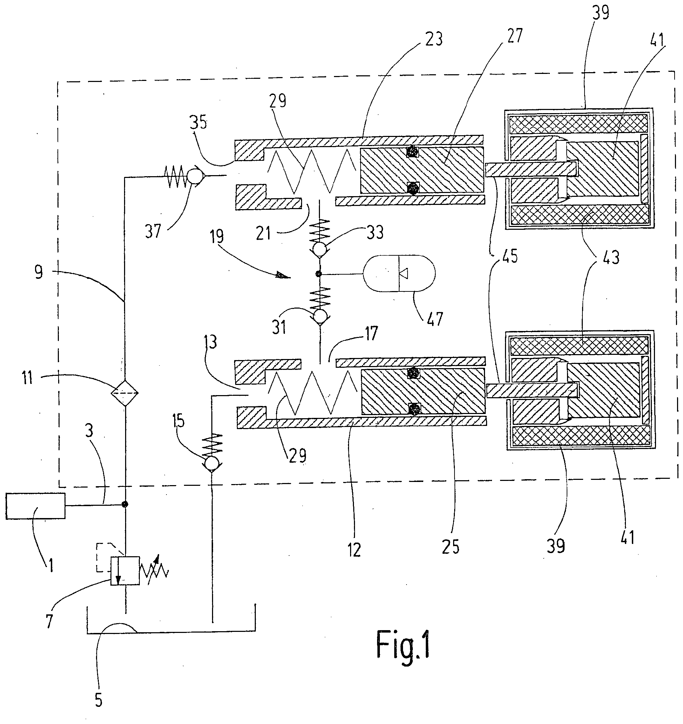

Nachstehend ist die Erfindung anhand von Ausführungsbeispielen erläutert, bei denen für eine Druckversorgung eines mit 1 bezeichneten Abnehmers, beispielsweise des Einspritzventils für ein Adblue-System, Kolbenpumpen vorgesehen sind. Der Abnehmer 1 ist über eine Druckleitung 3 mit Druckfluid aus einem Fluidvorrat zu versorgen, der in einem Vorratsbehälter 5 enthalten ist. Die Druckleitung 3 ist zum Behälter 5 über ein Druckbegrenzungsventil 7, das auf den gewünschten Versorgungsdruck eingestellt ist, abgesichert. Das Druckfluid erreicht die Druckleitung 3 über eine Förderleitung 9, in der ein Fluidfilter 11 angeordnet ist.
Bei dem Ausführungsbeispiel von Fig. 1 ist eine erste Kolbenpumpe, die als Saugpumpe 12 dient, mit ihrer Saugseite 13 über ein als Saugventil vorgesehenes Rückschlagventil 15 mit dem Vorratsbehälter 5 verbunden. Die Druckseite 17 der Saugpumpe 12 ist über einen Leitungszweig 19 mit der Saugseite 21 einer weiteren Kolbenpumpe in Verbindung, die als Druckpumpe 23 dient. Der Kolben 25 der Saugpumpe 12 und der Kolben 27 der Druckpumpe 23 sind jeweils über eine Rückstellfeder 29 für einen Füllhub des Kolbens 25, 27 vorgespannt. In dem Leitungszweig 19 zwischen Saugpumpe 12 und Druckpumpe 23 befinden sich ein Rückschlagventil 31 als Druckventil an der Druckseite 17 der Saugpumpe 12 sowie ein Rückschlagventil 33 als Saugventil an der Saugseite 21 der Druckpumpe 23. Deren Druckseite 35 ist über ein als Druckventil dienendes Rückschlagventil 37 mit der Förderleitung 9 und damit über das Filter 11 mit der Druckleitung 3 des Abnehmers 1 in Verbindung.
Die Kolben 25, 27 von Saugpumpe 12 und Druckpumpe 23 sind jeweils für einen Förderhub entgegen der Wirkung ihrer Rückstellfeder 29 mittels eines Betätigungsmagneten 39 bewegbar. Bei diesen handelt es sich jeweils um einen sog. "drückenden" Elektromagneten an sich bekannter Art, dessen Anker 41 bei Bestromen der Magnetwicklung 43 den zugehörigen Kolben 25, 27 über ein Betätigungsglied 45 gegen die Wirkung der Rückstellfeder 29 für einen Förderhub bewegt. Im Betrieb ist die Bestromung der Betätigungsmagneten 39 so getaktet, dass sich Förderhübe des Kolbens 25 der Saugpumpe 12 mit Füllhüben des Kolbens 27 der Druckpumpe 23 abwechseln, so dass der Kolben 25 der Saugpumpe 12 eine Füllmenge des Fluids dem Leitungszweig 19 zuführt, während der Kolben 27 der Druckpumpe 23 einen Füllhub durchführt. Die Saugpumpe 12 braucht wegen der zeitlichen Übereinstimmung mit dem Füllhub des Kolbens 27 der Druckpumpe 23 daher keinen hohen Fülldruck zu erzeugen. Wie Fig. 1 zeigt, ist am Leitungszweig 19 ein hydropneumatischer Druckspeicher 47 vorgesehen, der als Füllspeicher dient und Druckpulsationen des im Leitungszweig 19 herrschenden Fülldrucks glättet.

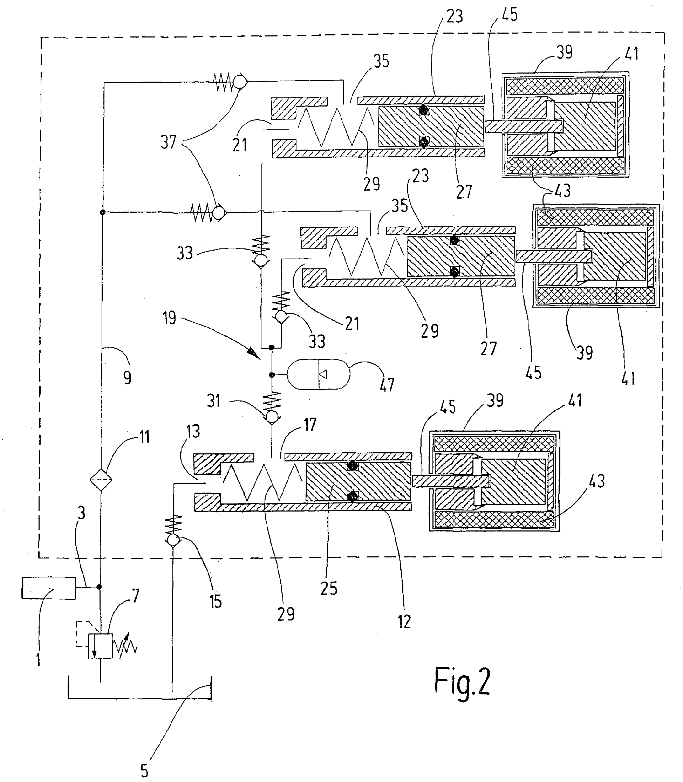

Das Ausführungsbeispiel von Fig. 2 unterscheidet sich gegenüber Fig. 1 insofern, als eine weitere Druckpumpe 23 zu der in Fig. 1 gezeigten, einzigen Druckpumpe 23 parallel geschaltet ist. Wie bei Fig. 1 ist die Saugseite 21 jeder Druckpumpe 23 über den den Füllspeicher 47 aufweisenden Leitungszweig 19 von der Saugpumpe 12 mit einer Füllmenge des Fluids versorgbar. Für eine stärker geglättete Druckversorgung des Abnehmers 1 über die mit den Druckseiten 35 der Druckpumpen 23 verbundene Förderleitung 9 und die Druckleitung 3 sind die weiteren Druckpumpen 23 miteinander getaktet, so dass der Förderhub der einen Pumpe 23 mit dem Füllhub der anderen Pumpe 23 zusammenfällt. Neben dem Vorteil des so geglätteten Druckverlaufs für die Druckversorgung ergibt sich durch die Parallelschaltung der Vorteil, dass bei gleichem Volumenstrom geringere Kolbendurchmesser erforderlich sind und sich höhere Taktgeschwindigkeiten energieeffizient gestalten lassen. Hinzu kommen die Vorteile, die aus der Hintereinanderschaltung mit einer der Füllung dienenden Saugpumpe 12 resultieren.

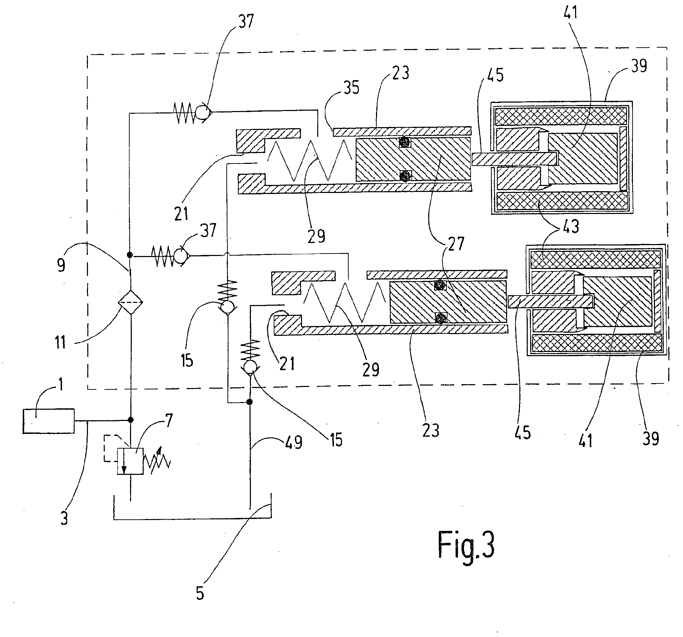

Bei dem nicht unter dem Schutzumfang dieser Erfindung fallenden Beispiel von Fig. 3 sind, wie bei Fig. 2, zwei Druckpumpen 23 zueinander parallel geschaltet, die mit ihren Druckseiten 35 über Druckventile in Form von Rückschlagventilen 37 mit der Förderleitung 9 verbunden sind. Anders als bei Fig. 2 sind die Druckpumpen 23 ohne vorgeschaltete Saugpumpe 12 mit ihren Saugseiten 21 über als Saugventile dienende Rückschlagventile 15 mit dem Behälter 5 des Fluidvorrats in Verbindung. Wie beim Ausführungsbeispiel von Fig. 2 sind die Druckpumpen 23 miteinander getaktet, so dass in der Förderleitung 9 der Fluid-Versorgungsdruck relativ geglättet ist, wobei, bei einer Parallelschaltung mit mehr als den zwei gezeigten Druckpumpen 23, die Druckpulsationen entsprechend stärker geglättet sind. Wie beim Beispiel von Fig. 2 ergeben sich aufgrund der Mehrzahl beteiligter Druckpumpen 23 entsprechend geringere Kolbendurchmesser bei gleichem Volumenstrom, so dass ohne weiteres auch höhere Taktfrequenzen realisierbar sind, mit entsprechend geglättetem Druckverlauf der Druckversorgung. Wie Fig. 3 zeigt, sind die Saugseiten 21 der Druckpumpen 23 über eine Saugleitung 49 mit dem Behälter 5 des Fluidvorrats in Verbindung.

## Patentansprüche

1. Einrichtung zur Bereitstellung von unter einem vorgebbaren Druck stehenden Fluiden, mit mindestens einer das betreffende Fluid aus einem Fluidvorrat (5) zu einem zugeordneten Abnehmer (1) unter Druck zuführenden Pumpe (23), wobei zumindest eine Fluid aus dem Fluidvorrat (5) ansaugende erste Pumpe (12) und mindestens eine weitere, Fluid zum Abnehmer (1) zuführende Pumpe (23) vorgesehen sind und wobei die Saugseite (21) der jeweiligen weiteren Pumpe (23) für eine Versorgung mit einer Füllmenge des Fluids mit der Druckseite (17) der ersten Pumpe (12) in Verbindung ist, **dadurch gekennzeichnet, dass** die Pumpen in Form von Kolbenpumpen (12, 23) vorgesehen sind, die elektrisch mittels Betätigungsmagneten (39) betätigt sind, die derart bestromt sind, dass im Wechsel Füllhübe des Kolbens (25, 27) einer Pumpe (12, 23) mit Förderhüben des Kolbens einer anderen Pumpe (12, 23) zeitlich zusammenfallen.

2. Einrichtung nach Anspruch 1, **dadurch gekennzeichnet, dass** mehr als eine weitere Pumpe (23) vorgesehen sind, deren Saugseiten (21) mittels der Fluid aus dem Fluidvorrat (5) ansaugenden ersten Pumpe (12) mit einer Füllmenge an Fluid versorgbar sind.

3. Einrichtung nach Anspruch 1 oder 2, **dadurch gekennzeichnet, dass** in der Verbindung (19) zwischen der Druckseite (17) der ersten Pumpe (12) und der Saugseite (21) der zumindest.einen weiteren Pumpe (23) ein als Füllspeicher dienender, hydropneumatischer Druckspeicher (47) vorgesehen ist.

4. Einrichtung zur Bereitstellung von unter einem vorgebbaren Druck stehenden Fluiden nach einem der vorstehenden Ansprüche, mit mindestens einer das betreffende Fluid aus einem Fluidvorrat (5) zu einem zugeordneten Abnehmer (1) unter Druck zuführenden Pumpe (23), **dadurch gekennzeichnet, dass** mehr als eine Pumpe in Form von Kolbenpumpen (23) vorgesehen sind, die mit ihren Druckseiten (35) mit dem Abnehmer (1) in Verbindung stehen und elektrisch mittels Betätigungsmagneten (39) betätigbar sind, die derart bestrombar sind, dass im Wechsel Füllhübe des Kolbens (27) einer Pumpe (23) mit Förderhüben des Kolbens (27) einer weiteren Pumpe (23) zeitlich zusammenfallen.

5. Einrichtung nach einem der vorstehenden Ansprüche, **dadurch gekennzeichnet, dass** als Betätigungsmagnete vorzugsweise drückende Elektromagnete (39) vorgesehen sind, die den zugehörigen Kolben (25, 27) gegen eine an ihm wirkende Rückstellkraft (29) bewegen.

6. Einrichtung nach einem der vorstehenden Ansprüche, **dadurch gekennzeichnet, dass** die Kolben (25, 27) der Kolbenpumpen (12, 23) gegen die Rückstellkraft einer Federanordnung (29) bewegbar sind.

## Claims

1. A device for providing fluids under a specifiable pressure, with at least one pump (23) supplying the related fluid from a fluid reservoir (5) to an assigned consumer (1) in pressurised manner, wherein at least one first pump (12) suctioning a fluid from the fluid reservoir (5) and at least one further pump (23) supplying fluid to the consumer (1) are provided and wherein the suction side (21) of the respective further pump (23) is connected to the pressure side (17) of the first pump (12) for supplying with a fill quantity of fluid, **characterised in that** the pumps, which are actuated electrically by means of actuating magnets (39), are provided in the form of piston pumps (12, 23), through which flow occurs such that filling strokes of the piston (25, 27) of a pump (12, 23) synchronise in alternation with delivery strokes of the piston (27) of another pump (12, 23).

2. The device according to claim 1, **characterised in that** more than one further pump (23) is provided, the suction sides (21) of which can be supplied with a fill quantity of fluid by means of the first pump (12) suctioning fluid from the first fluid reservoir (5).

3. The device according to claim 1 or 2, **characterised in that** a hydropneumatic pressure accumulator (47), serving as filling accumulator, is provided in the connection (19) between the pressure side (17) of the first pump (12) and the suction side (21) of the at least one further pump (23).

4. A device for providing fluids under a specifiable pressure according to one of the preceding claims, with at least one pump (23) supplying the related fluid from a fluid reservoir (5) to an assigned consumer (1) in pressurised manner, **characterised in that** more than one pump is provided in the form of piston pumps (23) which are connected to the consumer (1) with their pressure sides (35) and can be actuated electrically by means of actuating magnets (39) through which flow can occur such that filling strokes of the piston (27) of a pump (23) synchronise in alternation with delivery strokes of the piston (27) of a further pump (23).

5. The device according to one of the preceding claims, **characterised in that** preferably pressing electromagnets (39) are provided as actuating magnets, which electromagnets move the associated pistons (25, 27) against a reset force (29) acting against each piston.

6. The device according to one of the preceding claims, **characterised in that** the pistons (25, 27) of the piston pumps (12, 23) can be moved against the reset force of a spring arrangement (29).

## Revendications

1. Dispositif de mise à disposition de fluides sous une pression pouvant être donnée à l'avance, comprenant au moins une pompe (23), envoyant sous pression le fluide concerné d'un réservoir (5) de fluide à un consommateur (7) associé, dans lequel il est prévu au moins une première pompe (12) aspirant un fluide du réservoir (5) de fluide et au moins une autre pompe (23), envoyant du fluide au consommateur (1) et dans lequel le côté (21) d'aspiration de l'autre pompe (23) est, pour une alimentation en une quantité de remplissage du fluide, en communication avec le côté (17) refoulement de la première pompe (12), **caractérisé en ce que** les pompes sont prévues sous la forme de pompes (12, 23) à piston, qui sont actionnées électriquement au moyen d'aimants (39) d'actionnement, alimentés en courant de façon à ce que, en alternance, des courses de remplissage du piston (25, 27) d'une pompe (12, 23) coïncident dans le temps avec des courses de refoulement du piston d'une autre pompe (12, 23).

2. Dispositif suivant la revendication 1, **caractérisé en ce qu'**il est prévu plus qu'une autre pompe (23), dont les côtés (21) d'aspiration peuvent être alimentés en une quantité de remplissage de fluide au moyen de la première pompe (12) aspirant du fluide du réservoir (7) de fluide.

3. Dispositif suivant la revendication 1 ou 2, **caractérisé en ce que**, dans la liaison (19) entre le côté (17) de refoulement de la première pompe (12) et le côté (21) d'aspiration de la au moins une autre pompe (23), est prévu un accumulateur (47) de pression hydropneumatique, servant d'accumulateur de remplissage.

4. Dispositif de mise à disposition de fluides sous une pression pouvant être donnée à l'avance suivant l'une des revendications précédentes, comprenant au moins une pompe (23) envoyant le fluide concerné d'un réservoir (5) de fluide à un consommateur (1) associé, **caractérisé en ce qu'**il est prévu plus qu'une pompe sous la forme de pompes (23) à piston, qui communiquent par leur côté (35) de refoulement avec le consommateur (1) et qui peuvent être actionnées électriquement au moyen d'aimants (39) d'actionnement, lesquels peuvent être alimentés en courant, de manière à ce que, en alternance, des courses de remplissage du piston (25, 27) d'une pompe (12, 23) coïncident dans le temps avec des courses de refoulement du piston d'une autre pompe (12, 23).

5. Dispositif suivant l'une des revendications précédentes, **caractérisé en ce qu'**il est prévu, comme aimants d'actionnement, de préférence des électroaimants (39) de poussée, qui déplacent le piston (25, 27) associé à l'encontre d'une force (29) de rappel agissant sur lui.

6. Dispositif suivant l'une des revendications précédentes, **caractérisé en ce que** les pistons (25, 27) des pompes (12, 13) à piston peuvent être déplacés à l'encontre de la force de rappel d'un agencement (29) de ressort.
